(19) Europäisches Patentamt
European Patent Office
Office européen des brevets

(11) **EP 2 328 716 B1**

(12) **FASCICULE DE BREVET EUROPEEN**

(45) Date de publication et mention
de la délivrance du brevet:
**26.12.2012 Bulletin 2012/52**

(21) Numéro de dépôt: **09740452.9**

(22) Date de dépôt: **10.08.2009**

(51) Int Cl.:
***B23Q 9/00*** *(2006.01)*   ***B23B 49/02*** *(2006.01)*

(86) Numéro de dépôt international:
**PCT/FR2009/051577**

(87) Numéro de publication internationale:
**WO 2010/018340 (18.02.2010 Gazette 2010/07)**

(54) **SYSTÈME DE PERÇAGE ET PROCÉDÉ**

BOHRSYSTEM UND -VERFAHREN

DRILLING SYSTEM AND METHOD

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **12.08.2008 FR 0855544**

(43) Date de publication de la demande:
**08.06.2011 Bulletin 2011/23**

(73) Titulaire: **Airbus Operations
31060 Toulouse (FR)**

(72) Inventeurs:
• **MARGUET, Benoît
F-31140 Saint-Loup-Cammas (FR)**
• **LEBAHAR, Olivier
F-31470 Fontenilles (FR)**
• **LE GOURIELLEC, Eric
F-44250 Saint-Brevin-les-Pins (FR)**
• **LAROUSSE, Eric
F-31470 Fonsorbes (FR)**
• **LERAY, Jean-Marc
F-44570 Trignac (FR)**

(74) Mandataire: **Ilgart, Jean-Christophe et al
Brevalex
95, rue d'Amsterdam
F-75378 Paris Cedex 8 (FR)**

(56) Documents cités:
**EP-A- 0 761 351     EP-A- 1 563 950
US-A- 6 011 482**

EP 2 328 716 B1

**Description**

## DOMAINE TECHNIQUE

La présente invention se rapporte de façon générale au domaine des systèmes de perçage, destinés à être montés sur une surface à percer de forme et d'orientation quelconques. L'invention porte également sur un procédé de perçage.

L'invention s'applique de préférence mais non exclusivement au perçage en vue de l'assemblage de deux ensembles constitutifs d'un fuselage d'aéronef. Plus précisément, il peut s'agir d'un système de perçage adapté pour procéder à des opérations de perçage pour un assemblage dit de couture, c'est-à-dire un assemblage par la pose d'organes de fixation à sertir de type « lockbolt » ou rivet, le long d'une interface commune aux deux ensembles, dite zone de recouvrement ou zone de jonction.

A titre indicatif, on distingue généralement les coutures dites orbitales adaptées à l'assemblage de deux ensembles, appelés dans ce cas « tronçons », de forme approximativement cylindrique, des coutures dites longitudinales correspondant à l'assemblage de deux ensembles dont la forme est sensiblement celle d'un demi-cylindre. Les coutures longitudinales sont réalisées selon des génératrices de la section courante, tandis que les coutures orbitales sont quant à elles réalisées dans une zone d'interface comprise entre deux sections transversales du fuselage, ces deux types de coutures pouvant être réalisés respectivement selon des génératrices longitudinales non linéaires et selon des génératrices transversales non circulaires lorsque ces assemblages sont réalisés sur des parties de fuselage situées en pointe avant ou en extrémité arrière de l'aéronef, là où la forme du fuselage présente une double courbure.

Le système de perçage selon l'invention est susceptible d'être utilisé pour la jonction d'une zone de recouvrement présentant une simple courbure ou une double courbure. A titre informatif, les panneaux à simple courbure sont dits « développables », et présentent une génératrice rectiligne impliquant qu'ils peuvent être « déroulés » sur un plan. En revanche, les panneaux à double courbure, tels que les panneaux de fuselage du cockpit d'un aéronef, ne sont pas « développables » et ne disposent donc pas de génératrice rectiligne, c'est-à-dire qu'ils ne peuvent pas être « déroulés » sur un plan. Effectivement, ils présentent une première courbure, par exemple dans la direction longitudinale du panneau, ainsi qu'une seconde courbure distincte de la première, par exemple dans la direction transversale de ce même panneau.

## ÉTAT DE LA TECHNIQUE ANTÉRIEURE

Des systèmes de perçage sont habituellement utilisés pour réaliser des opérations répétitives à la surface d'ensembles de forme et d'orientation quelconques, notamment des ensembles de fuselage d'aéronef.

Ainsi, le brevet américain US5468099 décrit un système de perçage monté sur un mobile autonome apte à se déplacer sur la surface courbe de panneaux de fuselage à assembler. Le mobile autonome est utilisé pour assembler deux panneaux notamment à un longeron de structure interne de l'aéronef. Plus précisément, les panneaux sont disposés de manière à former sensiblement une ligne de jonction entre deux extrémités respectives des panneaux, sans qu'il y ait recouvrement. Le mobile autonome se déplace par reptation le long de la ligne de jointure et réalise des opérations de perçage d'orifices de fixation. Puis, les panneaux sont fixés par rivetage au longeron au travers des orifices de fixation effectués.

Cependant, plusieurs difficultés concernant le perçage apparaissent lorsque l'on cherche à assembler deux panneaux, non plus par le biais d'un longeron, mais directement l'un à l'autre par une zone de recouvrement. En effet, les tolérances relatives au montage en interférence des organes de fixation sont très serrées, en général de quelques centièmes de millimètre seulement, de sorte qu'il est extrêmement difficile de pré-percer les panneaux destinés à former la zone de recouvrement des deux ensembles, tout en assurant la coaxialité de chacun des trous dans la tolérance d'interférence. Par conséquent, les panneaux sont généralement disposés de sorte qu'ils soient percés au cours de la même opération de perçage, afin d'obtenir au cours de cette même opération un unique orifice de logement d'organe de fixation, formé par les deux trous respectivement obtenus à travers les deux panneaux au moins partiellement superposés.

La difficulté réside alors dans le fait que l'interface d'assemblage doit normalement être exempte de toute bavure et de tout copeau sous peine de réduire les caractéristiques de tenue en fatigue du fuselage ainsi assemblé. De plus, pour assurer l'étanchéité de l'interface entre les ensembles, indispensable au maintien de la pressurisation du fuselage en vol, celle-ci est garnie d'une fine couche d'un mastic d'étanchéité, ou mastic d'interposition. En outre, afin d'assurer la continuité mécanique de transmission des efforts dans le fuselage, il est fait en sorte que le contact entre les deux ensembles au niveau de chaque organe de fixation soit un contact métal-métal, c'est-à-dire qu'il n'y ait pas de couplage d'effort à travers le mastic d'interposition.

Or, le système de perçage du mobile autonome selon l'art antérieur est équipé d'un outil de perçage qui n'est pas prévu pour éviter la formation de bavures, ni réaliser un assemblage avec un contact métal-métal, à l'interface entre les deux panneaux.

Aussi, pour assurer ces différentes conditions, il est alors nécessaire de

- désassembler les deux ensembles afin de réaliser un nettoyage et un ébavurage des panneaux au niveau des orifices de fixation ;
- appliquer le mastic d'interposition sur les panneaux des ensembles destinés à former la zone de recouvrement ;
- mettre en référence les deux ensembles, pour amener à nouveau ces deux ensembles dans le positionnement relatif déterminé permettant la mise en place des organes de fixation, les deux ensembles ainsi positionnés formant conjointement la zone de recouvrement présentant une couche de mastic d'interposition entre les deux panneaux de cette zone.

Ainsi, l'incapacité du système de perçage selon l'art antérieur à éviter la formation de bavures, et à réaliser un assemblage avec un contact métal-métal, à l'interface entre les deux panneaux, impose de réaliser des opérations de désassemblage/d'éclatement et de réassemblage des ensembles, ainsi que des opérations de nettoyage/ébavurage de ces derniers, ce qui allonge considérablement le cycle de fabrication, rendant celui-ci coûteux et non optimisé.

Pour éviter l'apparition de telles bavures au niveau de la zone de recouvrement/jonction entre les deux panneaux devant être percés au cours de la même opération, une solution connue de l'art antérieur consiste à appliquer une force de serrage déterminée entre ces deux panneaux. Plus précisément, la pression désirée est telle qu'elle permet de générer un effort sur la zone de recouvrement qui empêche d'une part l'apparition de bavures, d'autre part l'insertion de copeaux à l'interface des panneaux assemblés, enduits de mastic d'interposition.

Cependant, les moyens généralement utilisés pour réaliser cette pression sont complexes et difficiles à mettre en oeuvre sur les ensembles à solidariser par couture. De plus, ces moyens de mise en pression rendent difficile voire impossible, pour des raisons d'encombrement, l'intervention d'un système de perçage. US-6 011 482 décrit un système de perçage selon le préambule de la revendication 1.

## EXPOSÉ DE L'INVENTION

Le but de la présente invention est de remédier au moins en partie aux inconvénients précités et notamment de proposer un système de perçage permettant d'appliquer d'une façon simple la pression requise sur une surface à percer lors du perçage de trous à travers cette même surface, afin d'empêcher d'une part l'apparition de bavures, et d'autre part l'insertion de copeaux à l'interface des panneaux assemblés, habituellement enduits de mastic d'interposition.

Pour ce faire, l'invention a pour objet un système de perçage comprenant :

- une structure de support, destinée à être montée sur une surface à percer,
- une poutre portée par la structure de support,
- un support d'outil porté par ladite poutre, et
- un outil de perçage monté sur ledit support d'outil.

Selon l'invention, ledit outil de perçage est monté sur ledit support d'outil par liaison glissière de direction parallèle à l'axe de perçage défini par ledit outil, ledit support d'outil présentant un orifice de blocage, ledit outil de perçage comportant un mandrin d'appui destiné à venir en contact contre ladite surface à percer ainsi qu'une bague expansible épousant ledit mandrin selon une surface de contact conique et adaptée pour qu'un mouvement relatif selon un axe central de surface de contact conique entre ledit mandrin et ladite bague procure une expansion de cette bague capable d'assurer son blocage dans ledit orifice de blocage, ledit système de perçage étant conçu pour que ledit mouvement relatif entre la bague bloquée dans ledit orifice de blocage et le mandrin d'appui procure, par déplacement dudit outil de perçage par rapport audit support d'outil par l'intermédiaire de ladite liaison glissière, un déplacement du mandrin en direction de ladite surface à percer, à travers l'orifice de blocage.

Ainsi, l'invention prévoit effectivement une solution simple et astucieuse permettant d'appliquer facilement la pression requise sur une surface à percer, par exemple une zone de recouvrement de panneaux de fuselage d'aéronef, lors du perçage des trous à travers cette même surface, afin d'empêcher d'une part l'apparition de bavures, et d'autre part l'insertion de copeaux à l'interface des panneaux assemblés, généralement enduits de mastic d'interposition.

En effet, l'outil de perçage employé peut être du type classiquement connu de l'homme du métier, tel que celui fabriqué par la société Cooper Power Tools et désigné « P2 Drill with Concentric Collet Foot ». Ce type d'outil de perçage est également décrit dans le document EP 0 761 351 A.

Il est à noter que les outils de perçage tels que ceux indiqués ci-dessus sont utilisés en coopération avec un orifice de centrage d'une grille de perçage montée fixement sur une zone de recouvrement. La présence du mandrin d'appui et de sa bague expansible associée est alors motivée par l'unique nécessité de bloquer cet outil en rotation et en translation dans l'orifice de centrage, par friction entre la bague et ce même orifice de centrage. Pour ce faire, la bague est mise en mouvement selon l'axe central de surface de contact conique entre celle-ci et le mandrin, à travers l'orifice de centrage correspondant et dans une direction opposée à la zone de recouvrement contre laquelle le mandrin, immobile par rapport à l'orifice de centrage, reste en appui. Ce mouvement est stoppé lorsque l'expansion de la bague dans l'orifice de la grille est suffisante pour bloquer l'outil en rotation et en translation par rapport à cette grille.

En revanche, à la différence de l'art antérieur, l'outil de perçage selon l'invention ne coopère pas avec un orifice de centrage d'une grille de perçage fixée à la zone de recouvrement, mais avec un orifice de blocage du support d'outil, celui-ci étant porté par une structure de support, elle-même montée sur la surface à percer. La coopération entre l'outil de perçage et l'orifice de blocage est permise par le fait que l'outil de perçage est monté par liaison glissière sur le support d'outil.

Ainsi, le système de perçage est conçu pour que le mouvement relatif appliqué entre la bague et le mandrin se traduise essentiellement par un mouvement du mandrin dans la direction de la zone de recouvrement, et non pas par un mouvement de la bague dans la direction opposée à celle de la zone de recouvrement, même si ce dernier mouvement peut être observé jusqu'à l'obtention d'un véritable blocage de la bague dans l'orifice de blocage du support d'outil.

Le système de perçage selon l'invention permet ainsi d'éviter l'utilisation de grille de perçage à fixer sur la zone de recouvrement.

A cet égard, le support d'outil comprend préférentiellement une première partie, sensiblement parallèle à l'axe de perçage, montée sur la poutre et supportant l'outil de perçage, et une seconde partie sensiblement orthogonale à l'axe de perçage et comportant ledit orifice de blocage. L'orifice de blocage est adapté pour recevoir la bague expansive de l'outil de perçage de manière traversante, en partie ou entièrement. Il est à noter que l'axe de perçage et l'axe central de surface de contact conique sont de préférence identiques. De plus, l'axe de symétrie de l'orifice de blocage est avantageusement identique à l'axe de perçage.

De préférence, l'outil de perçage comporte un corps d'outil de perçage solidaire dudit mandrin, et comporte en outre un vérin disposant d'un cylindre solidaire dudit corps d'outil et dont le piston est raccordé à la bague expansible. Ainsi, l'actionnement du vérin permet de mettre en mouvement relatif le mandrin solidaire du corps d'outil et la bague expansive.

De préférence, ledit support d'outil est monté de manière coulissante sur ladite poutre suivant l'axe de perçage, ce qui permet, lors d'étapes de perçage, d'amener le mandrin d'appui de l'outil de perçage en contact avec la surface à percer, et dans les autres situations, d'éloigner l'outil de perçage de cette surface pour éviter tout contact involontaire, par mesure de protection.

Avantageusement, ladite poutre est montée de manière coulissante sur la structure de support suivant un premier axe sensiblement perpendiculaire à l'axe de perçage. Ainsi, pour une position donnée de la structure de support par rapport à la surface, la poutre peut coulisser par rapport à la structure de support permettant au système de perçage de réaliser une pluralité d'étapes de perçage le long de la zone de recouvrement. Il est à noter que ledit premier axe est de préférence curviligne dans le cas où la structure de support présente une courbure donnée suivant le premier axe.

Dans un second mode de réalisation de l'invention, le système de perçage comporte :

- au moins deux ensembles d'avance, chacun monté de manière coulissante à ladite poutre suivant une direction d'élévation sensiblement parallèle à l'axe de perçage,

ladite structure de support et lesdits ensembles d'avance portant chacun des organes d'accrochage adaptés pour adhérer sur ladite surface à percer, et
un organe de commande commandant le déplacement relatif des ensembles d'avance par rapport à la poutre et le déplacement relatif de la poutre par rapport à la structure de support.

Ainsi, par répétition ordonnée de mouvements relatifs entre les ensembles d'avance et la poutre d'une part, et entre la poutre et la structure de support d'autre part, le système de perçage est apte à se déplacer par reptation, de manière autonome, le long de la zone de recouvrement suivant une direction donnée. Le système de perçage selon le second mode de réalisation est alors un système de perçage mobile autonome, permettant de réaliser des opérations de perçage de manière entièrement automatisée sur plusieurs zones de travail d'une surface à percer. Par ailleurs, plusieurs systèmes de perçage mobiles autonomes peuvent intervenir en même temps à des endroits différents de la surface à percer, procurant ainsi un gain de productivité élevé.

De préférence, la poutre comprend deux organes de coulissement chacun étant fixé à une extrémité de ladite poutre et lié par liaison glissière à la structure de support, chaque organe de coulissement étant équipé d'un organe moteur assurant le coulissement dudit organe de coulissement sur la structure de support. Le système de perçage comprend alors au moins un capteur pour détecter une orientation de la structure de support par rapport à une ligne désirée de déplacement, et une unité de commande pour commander lesdits premier et deuxième organes moteurs de ladite poutre de manière à ramener la structure de support dans une position déterminée en relation à ladite ligne désirée de déplacement.

Un second aspect de l'invention porte sur un procédé de perçage réalisé à l'aide du système de perçage exposé plus haut, dans lequel on applique, pour chaque étape de perçage d'un trou, un mouvement relatif entre la bague expansible et le mandrin d'appui.

Ainsi, chaque étape de perçage d'un trou au travers de la surface à percer comprenant une première opération de mise sous pression de ladite surface suivie d'une opération de perçage, l'application d'un mouvement relatif entre la bague et le mandrin permet effectivement de réaliser l'opération de mise en pression de cette surface. Le procédé selon l'invention permet d'empêcher, lors de chaque étape de perçage, d'une part l'apparition de bavures, et d'autre part l'insertion de copeaux à l'interface des panneaux assemblés, généralement enduits de mastic d'interposition.

L'application dudit mouvement relatif entre la bague expansible et le mandrin d'appui est préférentiellement réalisée de manière à engendrer un déplacement du mandrin en appui contre ladite surface à percer et à travers ledit orifice de blocage, sur une distance (x2) respectant la condition (x2) > 0,90. (x), où (x) correspond à une distance totale du mouvement relatif appliqué entre la bague et le mandrin.

La relation précitée traduit effectivement la volonté d'obtenir essentiellement un mouvement du mandrin à travers l'orifice de blocage plutôt qu'un mouvement de la bague à travers ce même orifice de blocage dans un sens opposé. L'homme du métier sera naturellement en mesure d'adapter la conception des différents éléments en question pour aboutir à un tel fonctionnement, notamment en dimensionnant de façon appropriée le diamètre nominal de la bague expansible et celui de l'orifice de blocage. A cet égard, il est à noter qu'un faible jeu initial entre la bague et l'orifice de blocage correspondant, par exemple inférieur à 0,5 mm, et de préférence de l'ordre de 0,3 mm, est requis pour obtenir le blocage de la bague dans ce même orifice de perçage extrêmement rapidement après le début de l'application du mouvement relatif, ce jeu étant néanmoins suffisant pour assurer une introduction aisée de la bague expansible dans l'orifice de blocage avant perçage. A ce titre, il a été constaté que l'application de tolérances H7 à H10 pour l'orifice de blocage du support d'outil, mais de préférence H7, pouvait s'avérer efficace pour l'obtention de l'effet désiré ci-dessus.

De préférence, l'application dudit mouvement relatif entre la bague expansible et le mandrin d'appui est réalisée de manière à engendrer, en fin d'application, une pression de mandrin d'appui, sur ladite surface à percer, comprise entre environ 600 et 1200 N. Comme cela sera décrit ci-après, la conception des moyens particuliers employés pour effectuer une telle pression permet de déterminer préalablement la pression qui sera exercée lors de l'application du mouvement relatif, en fonction de différents paramètres connus.

Quoi qu'il en soit, cette valeur de pression est donc tout à fait appropriée pour empêcher d'une part l'apparition de bavures, et d'autre part l'insertion de copeaux à l'interface des panneaux assemblés, généralement enduits de mastic d'interposition. Par conséquent, il est alors avantageusement possible d'effectuer tous les perçages d'orifices sur la zone de recouvrement/jonction lors d'une même étape de perçage, sans avoir à désassembler/réassembler les ensembles préalablement mis en référence, dans le repère de l'aéronef lorsqu'il s'agit d'ensembles de fuselage.

Un tel procédé dans lequel l'ensemble des perçages sont effectués, éventuellement suivis de l'ensemble de la pose et du sertissage des organes de fixation, présente l'avantage d'être très flexible en termes de main d'oeuvre. En effet, un système de perçage seul peut réaliser l'ensemble des étapes nécessaires à l'obtention de la couture, car à aucun moment il n'est nécessaire d'accéder en même temps des deux côtés du fuselage, que ce soit pour l'installation des outillages, le perçage-fraisurage, le démontage des outillages.

D'autre part, ce type de procédé selon l'invention permet également de faire intervenir plusieurs systèmes de perçage et/ou opérateurs tant à l'extérieur qu'à l'intérieur du fuselage, de manière à réduire le temps de réalisation des coutures. De ce fait, il est notable que le procédé selon le second aspect de l'invention offre une grande flexibilité en termes d'organisation du travail pour une même couture en fonction des cadences de production exigées, contrairement par exemple aux procédés de l'art antérieur dit avec « éclatement », du fait du point de regroupement lié à ce même éclatement/désassemblage des deux ensembles après perçage.

Le procédé selon l'invention propose donc une solution simple permettant d'éviter une mise en place de moyens de mise en pression de la zone de recouvrement, étant donné que la mise en pression est réalisée lors de l'étape de perçage par le système de perçage selon l'invention. Le cycle de fabrication est donc grandement optimisé. De plus, il apparaît clairement que la solution adoptée ne présente aucun inconvénient en termes d'encombrement contrairement à ce qui était rencontré dans l'art antérieur, étant donné que les moyens de mise en pression sont constitués par le système de perçage lui-même.

De plus, cette manière astucieuse de réaliser la pression lors du perçage des trous autorise facilement la réalisation de coutures sur des zones de recouvrement de formes complexes, telles que les zones de recouvrement à double courbure, ou encore sur des ensembles formant des structures dites « fermées », étant donné que seul l'accès à un unique côté de la structure s'avère nécessaire pour la mise en place du système de perçage générant la pression requise.

D'autres avantages et caractéristiques de l'invention apparaîtront dans la description détaillée non limitative ci-dessous.

## BRÈVE DESCRIPTION DES DESSINS

On décrira à présent, à titre d'exemples non limitatifs, d'un mode de réalisation préféré de l'invention, en se référant aux dessins annexés, dans lesquels :

La figure 1 est une vue de dessus de deux ensembles à assembler ;
La figure 2 est une vue en perspective du système de perçage selon un mode de réalisation de l'invention ;
La figure 3 est une vue en perspective du support d'outil du système de perçage ;
La figure 4 est une vue en perspective d'un outil de perçage selon un mode de réalisation de l'invention ;
Les figures 5 à 7 sont des vues en coupe longitudinale d'une partie de l'outil de perçage coopérant avec le support d'outil ;
La figure 8 est une vue schématique de côté d'une partie de l'outil de perçage coopérant avec le support d'outil ;
La figure 9 est une vue en perspective d'un système de perçage selon un second mode de réalisation de l'invention ;
Les figures 10a à 10g sont des vues schématiques de côté du système de perçage selon le second mode de réalisation de l'invention à différents instants de déplacement ; et
La figure 11 est un logigramme représentant la procédure de fonctionnement du système de perçage selon le second mode de réalisation de l'invention.

## EXPOSÉ DÉTAILLÉ DE MODES DE RÉALISATION PARTICULIERS

Le système de perçage selon l'invention est destiné à être monté sur une surface à percer, surface qui peut être de forme et d'orientation quelconques. Dans la suite de la description, on décrira des modes de réalisation de l'invention appliquée à l'assemblage de deux ensembles par couture, constituant deux tronçons transversaux du fuselage d'un aéronef. La surface à percer correspond alors à une zone de recouvrement de deux panneaux appartenant à ces deux ensembles, comme ce sera décrit ultérieurement. Il est à noter que cet exemple d'application de l'invention n'est nullement limitatif, d'autres utilisations peuvent en effet être envisagées.

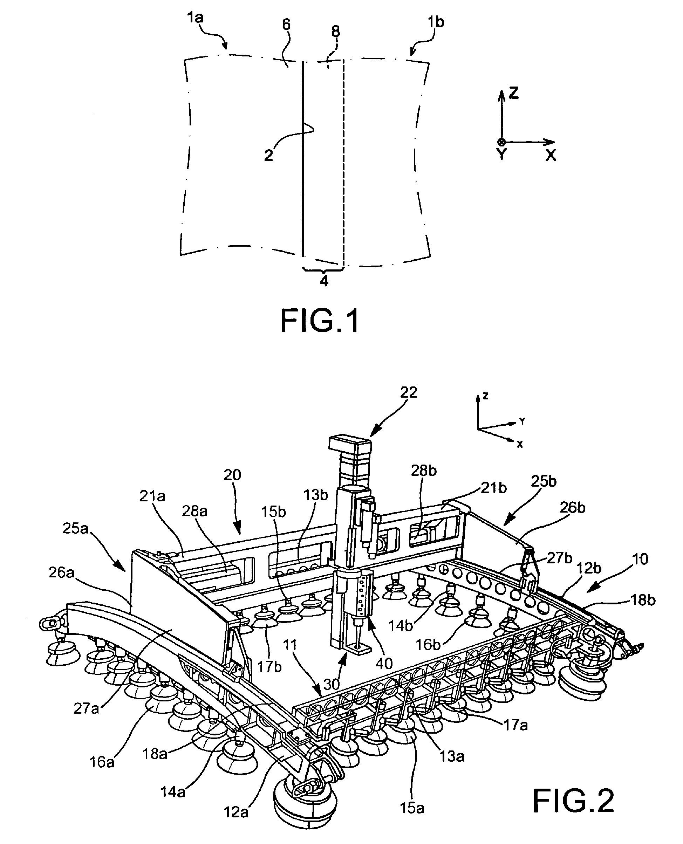

En référence tout d'abord à la figure 1, on peut voir deux ensembles 1a, 1b destinés à être assemblés par couture dite orbitale, à l'aide de rivets, dont les opérations de perçage sont réalisées par le système de perçage selon un mode de réalisation de la présente invention. Il s'agit ici de deux ensembles 1a, 1b constituant respectivement deux tronçons transversaux du fuselage d'un aéronef.

Dans cet exemple d'application de l'invention, les deux ensembles 1a, 1b sont dans un positionnement relatif déterminé dans un repère direct X, Y, Z, où la direction X est parallèle à l'axe circonférentiel du fuselage, donc sensiblement tangent à la surface des panneaux. La direction Y correspond sensiblement à l'axe longitudinal du fuselage et la direction Z est sensiblement perpendiculaire à la surface des panneaux. Le positionnement relatif est tel qu'une zone de recouvrement 4 est formée, également dite zone de jonction formée par deux panneaux 6, 8 au moins partiellement superposés et appartenant respectivement aux deux ensembles 1a, 1b. Bien entendu, la zone de jonction 4 est destinée à recevoir la couture orbitale de rivets, tel que cela sera explicité ci-après. De ce fait, suite à la mise en référence des deux ensembles 1a, 1b la zone de recouvrement obtenue, dans laquelle se trouve une couche de mastic d'interposition entre les deux panneaux 6, 8, se trouve dans la configuration adéquate pour la réalisation du perçage des trous destinés à loger les différents rivets de la couture. A titre informatif, on prévoit préférentiellement que du mastic d'interposition ou mastic d'étanchéité soit placé sur chacun des deux panneaux 6, 8 avant la mise en référence des deux ensembles 1a, 1b.

Le système de perçage selon un mode de réalisation de l'invention va maintenant être décrit en détail, en référence aux figures 2 à 9.

La figure 2 montre un système de perçage selon un mode de réalisation monté sur les deux panneaux 6, 8, de préférence sur le côté extérieur des panneaux.

Il comprend une structure de support 10 équipée, de préférence, d'organes d'adhérence permettant d'adhérer aux panneaux 6, 8. Une poutre 20, sensiblement rectiligne et s'étendant suivant la direction Y est portée par la structure de support 10. Un support d'outil 30 est monté sur la poutre 20 et présente un orifice de blocage 31. Un outil de perçage 40 est monté sur le support d'outil 30 et orienté de manière à réaliser des opérations de perçage sensiblement suivant la direction Z, également appelée axe de perçage.

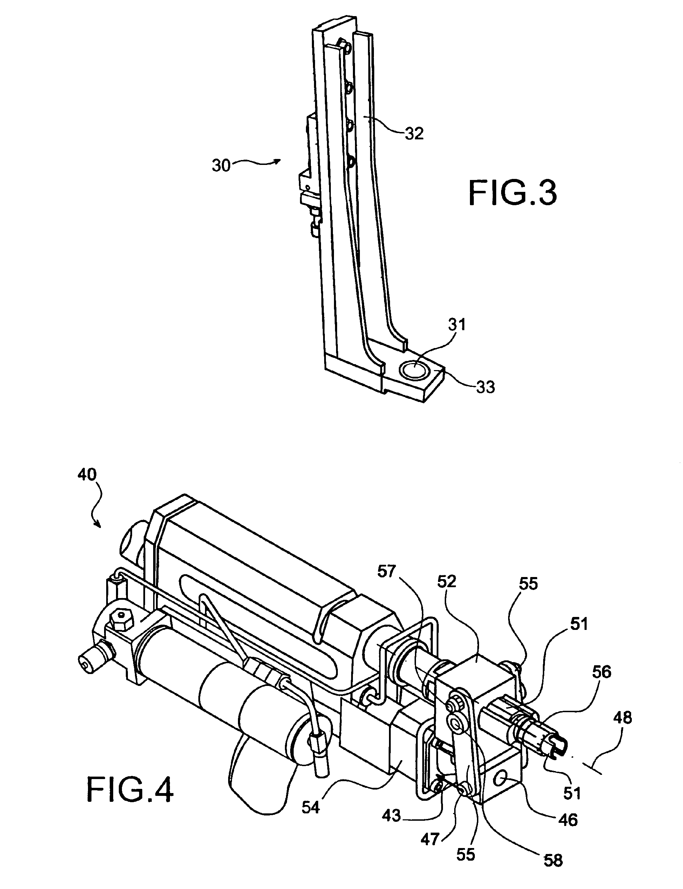

Une description plus précise des différents éléments du système de perçage représenté sur les figures 2 et 3 va maintenant être faite.

La structure de support 10 comprend principalement un cadre de support 11, de préférence sensiblement carré ou rectangulaire. Le cadre comporte des rails latéraux 12a et 12b sensiblement parallèles à la direction X et des rails de raccord 13a et 13b fixés aux rails latéraux 12a et 12b de manière à former le cadre 11.

Chaque rail 12a, 12b, 13a et 13b supporte une pluralité de pieds, respectivement 14a, 14b, et 15a, 15b situés du même côté du plan formé par le cadre 11 et prévus pour venir en contact avec la surface à percer par des organes d'adhérence, respectivement 16a, 16b, et 17a, 17b tels que des ventouses à actionnement pneumatique. Il peut s'agir également de ventouses à actionnement électromagnétique ou hydraulique. Les organes d'adhérence 16, 17 seront décrits en détail plus loin.

Les rails latéraux 12a, 12b présentent de préférence une courbure suivant la direction X sensiblement équivalente à la courbure des panneaux dans cette direction. Ainsi, le système de perçage présente une capacité d'adhérence optimale sur les panneaux. Bien entendu, les rails de raccord 13a, 13b peuvent également présenter une courbure adéquate pour adhérer aux panneaux, dans le cas où ceux-ci présenteraient également une courbure suivant la direction Y.

Par ailleurs, les rails latéraux et de raccord peuvent être démontés sans difficulté pour adapter le système de perçage au(x) rayon(s) de courbure de la surface de travail. Cette modularité des rails du système de perçage permet d'obtenir une bonne flexibilité d'utilisation du système.

La poutre 20 est sensiblement rectiligne suivant la direction Y et supportée par les rails latéraux 12a, 12b du cadre de support 11. Plus précisément, la poutre 20 est montée en ses extrémités 21a, 21b suivant la direction Y aux rails latéraux respectivement 12a, 12b. La poutre 20 peut être montée fixement sur les rails ou de préférence montée de manière coulissante, comme le montre la figure 2. Lorsque la poutre est montée de manière coulissante, des dispositifs de guidage 25a et 25b sont montés fixement aux extrémités 21a, 21b de la poutre suivant la direction Y et montés par liaison glissière sur les rails latéraux 12a et 12b.

Chaque dispositif de guidage 25a, 25b comprend un bâti 26a, 26b qui s'étend suivant la direction X et est disposé sensiblement au-dessus du rail de guidage 12a, 12b respectif suivant la direction Z. La partie inférieure 27a, 27b du bâti 26a, 26b est adaptée pour coulisser le long d'une tige de coulissement 18a, 18b disposée sur la partie supérieure du rail de guidage 12a, 12b.

Un organe moteur 28a, 28b peut également être prévu et fixé sur le bâti 26a, 26b pour permettre le déplacement du dispositif de guidage 25a, 25b par rapport au rail latéral 12a, 12b. Ainsi, la poutre 20 est apte à se déplacer relativement à la structure de support 10 suivant la direction X.

Le support d'outil 30 est monté sur la poutre 20 et conçu pour supporter un outil de perçage et éventuellement d'autres outils permettant de travailler sur la surface à percer.

Le support d'outil 30 peut être monté fixement sur la poutre 20, ou de préférence monté par liaison glissière suivant la direction Z. Dans ce cas, comme le montre la figure 2, un vérin 22 et un organe moteur (non représenté) sont fixés sur la poutre 20 pour assurer le coulissement du support d'outil 30 par rapport à la poutre 20. Le fait que le support d'outil 30 soit monté coulissant par rapport à la poutre 20 suivant la direction Z permet, lors d'opérations de perçage, d'amener l'outil de perçage au plus près de la surface à percer, et dans les autres situations, d'éloigner l'outil de perçage de cette surface pour éviter tout contact involontaire.

Outre l'outil de perçage, un ou plusieurs autres effecteurs peuvent être montés sur le support d'outil 20. Les effecteurs ont pour fonction de permettre la réalisation de l'ensemble des opérations d'assemblage des panneaux. Ces effecteurs peuvent comprendre notamment les modules suivants :

- module d'aspiration des copeaux,
- module de vision (caméra),
- module de dépose mastic,
- module d'insertion de fixations,
- module de soudage ou collage,
- module de décapage/ponçage ou peinture.

Le support d'outil 30 est conçu pour assurer la perpendicularité des perçages par rapport à la surface à percer. A cet effet, et comme le montre la figure 3, le support d'outil 30 comprend une partie de guidage 32 montée sur la poutre 20 par l'intermédiaire du vérin 22 s'étendant suivant la direction Z et une partie de blocage 33 sensiblement perpendiculaire à la partie de guidage 32. Ainsi, le support d'outil 30 a une forme sensiblement en L. Selon l'invention, la partie de blocage comprend un orifice de blocage 31 dont l'axe central correspond à l'axe de perçage. L'outil de perçage 40 est alors monté sur la partie de guidage 32 du support d'outil 30 et comprend un élément qui coopère avec l'orifice de blocage 31, comme décrit en détail ultérieurement. La perpendicularité de l'outil de perçage 40 par rapport à la zone de recouvrement est garantie. L'axe de perçage coïncide avec la direction Z.

Dans le but de réaliser des opérations de perçage, un outil de perçage 40 est monté sur le support d'outil. Selon l'invention, l'outil de perçage est monté par liaison glissière sur le support d'outil et peut ainsi coulisser suivant l'axe de perçage.

L'outil de perçage employé peut être du type classiquement connu de l'homme du métier, tel que celui fabriqué par la société Cooper Power Tools et désigné « P2 Drill with Concentric Collet Foot ». Ce type d'outil de perçage est également décrit dans le document EP 0 761 351 A, qui est inclus ici par référence. Cet outil 40 est aussi représenté en détail sur les figures 4 à 8.

D'une manière générale, l'outil de perçage 40 est avantageusement utilisé dans la présente invention pour :

- positionner et maintenir cet outil sur le support d'outil par l'intermédiaire d'une bague de centrage expansible,
- réaliser une butée de profondeur par contact de l'extrémité d'un mandrin d'appui sur la zone de recouvrement, et
- cela constitue une particularité propre à la présente invention, générer une pression de contact sur le fuselage concentriquement au perçage à l'aide du mandrin, afin d'assurer un contact direct des panneaux à assembler et d'éviter ainsi la formation de bavure et l'introduction de copeaux à l'interface pourvue de mastic d'interposition.

La troisième fonction, relative à la pression exercée sur l'interface, est une conséquence du principe de fonctionnement particulier de l'outil de perçage 40 dans des conditions spécifiques imposées au niveau du support d'outil 30.

En référence donc aux figures 4 à 8, on voit l'outil de perçage 40 comportant globalement un corps 42 se prolongeant par un mandrin d'appui 51, dont l'extrémité 50 est destinée à être au contact de la zone de recouvrement 4 durant le perçage. Durant le perçage d'un trou dans le fuselage, le foret (non représenté) est prévu pour se déplacer intérieurement et concentriquement par rapport au mandrin d'appui 51.

Au niveau de la partie avant de l'outil 40, le mandrin 51 est solidaire d'un pied de pression 52, lui-même solidaire d'un axe 57 ou axe supérieur. De plus, une bague expansible 56, destinée à être introduite dans l'orifice de blocage 31 du support d'outil 30, épouse le mandrin 51 selon une surface de contact conique 53 visible sur la figure 4. Cette surface de contact conique 53, prévue pour se rétrécir en se rapprochant de l'extrémité 50 du mandrin, permet lorsqu'un mouvement relatif est exercé selon un axe central de surface de contact conique 48, entre le mandrin 51 et la bague 56, une expansion de cette bague assurant son blocage dans l'orifice de blocage 31. Plus précisément et comme cela sera détaillé ultérieurement, le mouvement relatif entre la bague expansible 56 et le mandrin d'appui 51 provoque, suite au blocage de la bague expansible 56 dans l'orifice de blocage 31, un déplacement du mandrin 51 en appui contre la zone de recouvrement 4, à travers l'orifice de blocage et selon l'axe central de surface de contact conique 48 en direction de cette zone de recouvrement afin d'exercer une pression sur celle-ci.

Par ailleurs, il est à noter que, pendant toute la durée d'une étape de perçage, le support d'outil est statique par rapport à la zone de recouvrement 4 dans le repère X, Y, Z de l'aéronef. Ainsi, lorsque le mandrin d'appui exerce une force de pression sur la zone de recouvrement, la réaction de celle-ci sur le mandrin ne s'accompagne pas d'un déplacement de la bague expansible dans la direction opposée à la direction de la force de pression exercée. En effet, la bague est solidaire du support d'outil, celui étant statique lors d'une étape de perçage. Ainsi, le système de perçage selon l'invention permet d'appliquer une pression sur la zone de recouvrement à la valeur désirée.

Pour obtenir ce déplacement relatif, l'outil 40 comprend un vérin 54 solidaire du corps 42, dont l'extrémité 46 est reliée par un axe 47 ou axe inférieur, à une paire de biellettes 55, et plus précisément à une extrémité inférieure de ces biellettes 55 dont l'extrémité supérieure est quant à elle articulée sur l'axe supérieur 57 précité. De plus, entre les axes parallèles 47 et 57, l'outil 40 présente un axe intermédiaire 58 ou double axe intermédiaire solidaire de la bague d'expansion 56, cet axe 58 traversant des lumières 45 pratiquées dans le pied de pression 52.

Ainsi, la conception de cet outil 40 est telle que lorsque le vérin 54 est actionné dans le sens de la flèche 43 de la figure 4, cela provoque un déplacement de l'extrémité inférieure des biellettes 55 dans le même sens que celui de la flèche 43. Un tel déplacement des biellettes 55 sous l'effet du vérin 54 produit effectivement un mouvement relatif entre la bague 56 et le mandrin 51, déplacement relatif qui du fait du contact selon la surface conique 53 produit une expansion de la bague 56. Plus précisément, dans son principe tel que décrit dans l'art antérieur, l'actionnement du vérin 54 produit un mouvement de la bague 56 vers l'arrière pendant que le mandrin reste immobile en appui contre la zone 4, c'est-à-dire que l'axe 57 joue le rôle de pivot et l'axe 58 se déplace dans le sens opposé à celui allant vers les panneaux à assembler, à savoir selon la flèche 43, à travers les lumières 45 du pied de pression prévues à cet effet. Ainsi, dans ce cas, c'est la bague 56 qui en s'expansant subit simultanément un mouvement par rapport à l'orifice de blocage dans lequel elle est placée, et non le mandrin qui reste fixe par rapport à ce même orifice de blocage. Toujours dans l'art antérieur, le mouvement relatif est stoppé lorsque la bague a été suffisamment expansée pour assurer le blocage en rotation et en translation de l'outil par rapport au support d'outil pourvu de l'orifice de blocage en question.

Dans le procédé selon la présente invention, il est en revanche fait en sorte que le mouvement relatif appliqué entre la bague 56 et le mandrin 51 se traduise essentiellement par un mouvement du mandrin dans la direction de la zone de recouvrement 4, et non pas par un mouvement de la bague 56 dans la direction opposée à celle de la zone de recouvrement, même si ce dernier mouvement peut être observé jusqu'à l'obtention d'un véritable blocage de la bague 56 dans l'orifice de blocage 31 du support d'outil 30. A cet égard, l'homme du métier sera naturellement en mesure d'adapter la conception des différents éléments en question pour aboutir à un tel fonctionnement, notamment en dimensionnant de façon appropriée le diamètre nominal de la bague expansible 56 et celui de l'orifice de blocage 31.

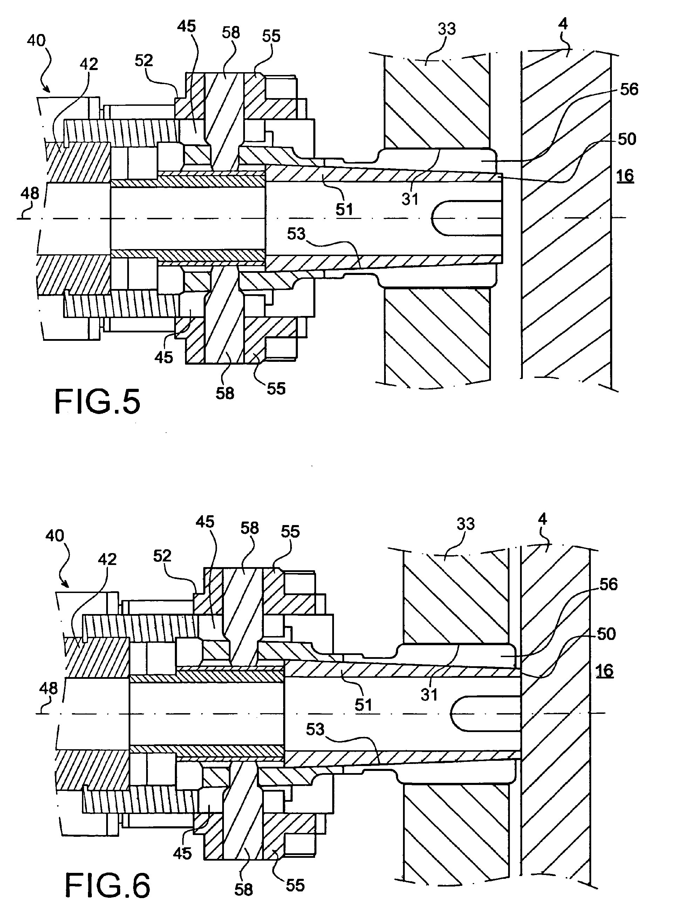

Comme montré sur la figure 6 représentant l'outil 40 avant l'actionnement du vérin 54 et juste après son introduction dans l'orifice de blocage 31, un faible jeu initial entre la bague 56 et l'orifice de blocage 31, par exemple inférieur à 0,5 mm et de préférence de l'ordre de 0,3 mm, permet aisément d'obtenir le blocage de la bague dans ce même orifice de blocage 31 extrêmement rapidement après le début de l'application du mouvement relatif, ce jeu étant néanmoins suffisant pour assurer une introduction aisée de la bague expansible dans l'orifice de blocage 31 avant perçage. A ce titre, il a été constaté que l'application d'une tolérance H7 pour l'orifice de blocage 31 du support d'outil 30 pouvait s'avérer efficace pour l'obtention de l'effet désiré.

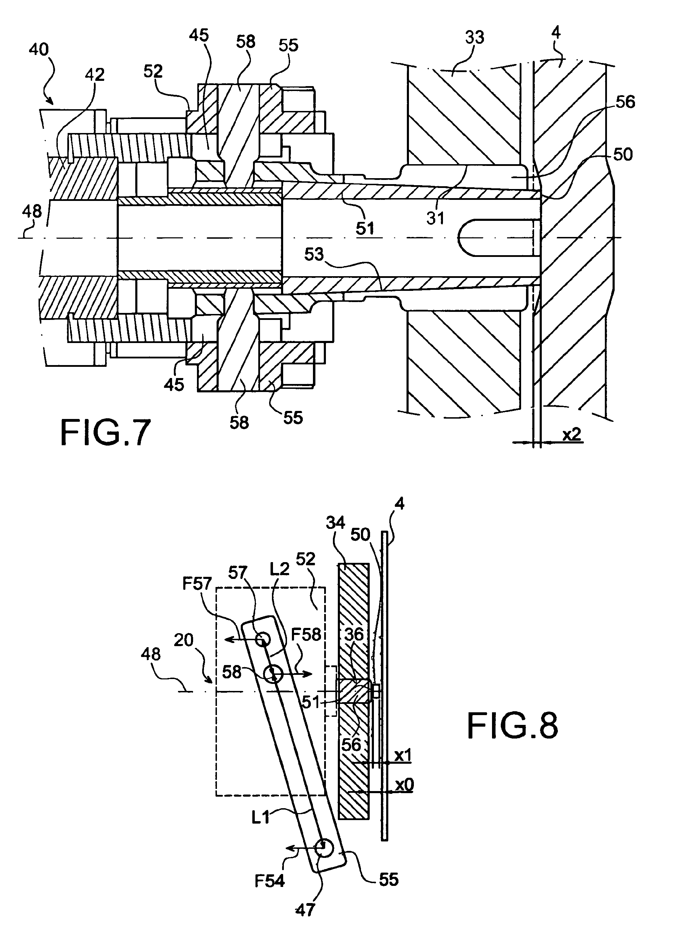

Par ailleurs, l'application du mouvement relatif entre la bague expansible 56 et le mandrin d'appui 51 est préférentiellement réalisée de manière à engendrer un déplacement du mandrin en appui contre la zone de recouvrement 4 et à travers l'orifice de blocage 31, sur une distance (x2), montrée sur la figure 7, respectant la condition (x2) > 0,90. (x), où (x) (non représenté) correspond à une distance totale du mouvement relatif appliqué entre la bague 56 et le mandrin 51. La relation précitée traduit effectivement la volonté d'obtenir essentiellement un mouvement du mandrin 51 à travers l'orifice de blocage 31, plutôt qu'un mouvement de la bague 56 à travers ce même orifice de blocage 31 dans un sens opposé.

Par conséquent, contrairement à l'art antérieur, le mouvement relatif provoque un déplacement du mandrin 51 dans le repère X, Y, Z de l'aéronef, entraînant avec lui la partie sollicitée en pression de la zone 4 tel que montré sur la figure 7, la bague 56 restant quant à elle sensiblement immobile dans ce même repère.

En pratique, il a été constaté que l'axe 58 joue alors le rôle de pivot en restant fixe dans le repère X, Y, Z de l'aéronef, et que l'axe 57 se déplace dans le sens allant vers la zone de recouvrement 4, opposé au sens de la flèche 43.

Une telle situation présente l'avantage de pouvoir, par l'intermédiaire de ce fonctionnement particulier recherché, appliquer dans la zone contiguë au perçage une force de pression qui peut être suffisante pour :

- assurer le fluage du mastic d'étanchéité au voisinage immédiat de l'orifice du fuselage, de manière à assurer un contact métal-métal entre les deux panneaux de la zone 4 ;
- éviter l'introduction de copeaux et d'huile de coupe à l'interface ; et
- éviter la formation de bavures en entrée et sortie de perçage à l'interface.

A présent, il va être démontré que la pression de contact exercée par le mandrin 51 de l'outil 40, lors du perçage d'un orifice sur le fuselage, peut être maîtrisée en fonction de différents paramètres.

Au niveau de la surface de contact conique 53 entre le mandrin 51 et la bague 56, le mandrin 51 sollicite la bague par une pression proportionnelle au déplacement relatif de ces deux éléments et normale à la surface de contact. Il subit en outre un frottement d'angle $\varphi 1$ qui tend à s'opposer au déplacement relatif.

Lors de son expansion dans l'orifice 31 du support d'outil 30, la bague 56 subit une pression radiale $P_{56}$ proportionnelle au déplacement relatif entre le mandrin 51 et la bague 56. Si $\Delta x$ est ce déplacement, l'accroissement de pression résultant $\Delta P_{56}$ est tel que :

$$\Delta P_{56} = K \Delta x \ tg\alpha / \ S$$

où K est une constante fonction de l'élasticité des pièces en présence, $S$ étant la surface de contact entre la bague 56 et l'orifice 31 du support d'outil 30.

Si $\varphi 2$ est le coefficient de frottement à l'interface entre la bague 56 et l'orifice 31, on appelle $F_{56}$ la résultante axiale des efforts de frottement de la bague 56 dans l'orifice :

$$F_{56} = P_{56} . S . tg\varphi 2$$

Il est tout d'abord considéré une première situation dans laquelle il n'y a pas de réaction de la zone de recouvrement 4 contre le mandrin 51, c'est-à-dire que l'outil est centré et bloqué dans le support d'outil 30 sans que celui-ci ne soit en vis-à-vis d'un obstacle. La bague 56 est introduite sans jeu ou presque dans l'alésage du support d'outil 30. Dans ces conditions, lorsque le vérin 54 est actionné, deux cinématiques sont susceptibles de se produire. Dans la première cinématique, celle la plus probable et correspondant à l'effet désiré, l'axe 58 reste immobile dans le repère X, Y, Z de l'aéronef, et joue le rôle de pivot. Dans la seconde cinématique contraire à la première, c'est l'axe 57 qui reste immobile dans le repère X, Y, Z de l'aéronef et joue le rôle de pivot, car la bague 56 se déplace par rapport au support d'outil 30 dans le sens opposé à celui de la zone 4.

Le vérin 54, l'axe 57 et l'axe 58 étant liés par les biellettes 55 rigides, pour ces deux cinématiques, la vitesse et le déplacement relatifs entre les éléments 56 et 51 sont les mêmes.

Les efforts appliqués sur le mandrin 51, sur la bague 56 et le vérin 54 étant proportionnels à ce déplacement relatif, ils sont également les mêmes pour les deux cinématiques. Ainsi, la solution cinématique la plus probable est celle qui conduit à la dissipation d'énergie minimale. A cet égard, l'énergie dispensée par le vérin 54 se répartie de la façon suivante :

- pour la première cinématique, entre le frottement au niveau de la surface conique 53 entre les éléments 51 et 56, la déformation élastique radiale des différents éléments (support 30, bague 56, mandrin 51), consécutive à l'expansion, et les frottements aux articulations ;
- pour la seconde cinématique, entre les mêmes sources de dissipation que celles mentionnées ci-dessus, ayant la même intensité, auxquelles s'ajoute le frottement entre la bague 56 et l'orifice de blocage 31.

Energétiquement, la première cinématique est donc plus favorable, et c'est donc celle qui sera effectivement observée lors de la mise en oeuvre du procédé. Ainsi, dès lors qu'il y a contact entre la bague 56 et l'orifice de blocage 31 du support d'outil 30, la bague 56 reste immobile par rapport au support et l'action du vérin 54 conduit à une « extraction » du mandrin 51.

De plus, en se plaçant dans le cas de la première cinématique indiquée ci-dessus, sans obstacle devant le mandrin, l'actionnement du vérin 54 provoque un déplacement du mandrin 51 par rapport au support 30 en direction de la zone 4 et selon l'axe 48, jusqu'à ce que l'effort appliqué à ce vérin soit égal à l'effort de réaction de la bague 56 sur le mandrin 51, cet effort étant par la suite dénommé $F_{51}$.

En isolant le mandrin 51 dans cette situation d'équilibre, sous réserve que la fin de course du vérin 54 ne soit pas atteinte avant cet état, selon l'axe 48 correspondant également à l'axe de perçage, le mandrin 51 est en équilibre sous l'action de deux forces qui sont donc égales en intensité et direction, mais de sens opposé, à savoir :

- $F_{54}$ + $F_{57}$, respectivement les forces appliquées par le vérin 54 et par l'axe 57, et
- la réaction de la bague 56 sur le mandrin 51, à savoir $F_{51}$.

Chaque biellette 55 est quant à elle en équilibre sous l'action de trois forces parallèles $F_{54}$, $F_{57}$ et $F_{58}$, comme montré sur la figure 8. On en déduit que :

- $$F_{57} = \frac{L1}{L2} F_{54} \, ,$$ les longueurs L1 et L2 correspondant respectivement à la distance entre l'axe 47 et l'axe 58, et à la distance entre l'axe 58 et l'axe 57 ; et

- $$F_{51} = F_{54}{}^{MAX}\left(1 + \frac{L1}{L2}\right),$$ $F_{54}{}^{MAX}$ étant la force maximale déployée par le vérin 54.

A noter que cette force est obtenue pour un déplacement du mandrin 51 selon l'axe 46 d'une distance dénommée $x_1$ et montrée schématiquement sur la figure 8, à partir de sa position initiale comptée au début du contact entre la bague 56 et l'orifice 31 du support d'outil 30.

Comme indiqué précédemment, la force $F_{51}$ est proportionnelle au déplacement relatif entre les éléments 56 et 51, donc proportionnelle au déplacement $x_1$, soit $F_{51} = C_{51}x_1$, $C_{51}$ étant un coefficient de raideur qui rend compte de cette proportionnalité.

En se plaçant à présent dans une configuration différente où un obstacle, en l'occurrence la zone de recouvrement 4, est positionnée contre le mandrin 51 en position initiale par rapport au support d'outil, lorsque le vérin 54 est actionné, le mandrin 51 va alors se déplacer jusqu'à atteindre une position d'équilibre $x_2$ considéré selon l'axe 46, position telle que :

- $$x_2 < x_1 ,$$

et

- $$F_{54}{}^{MAX}\left(1 + \frac{L1}{L2}\right) = C_{51}x_2 + R$$

On en déduit que la réaction $R$, équivalente à la force de poussée/pression sur le fuselage, est donnée par :

-

$$R = C_{51}(x_1 - x_2),$$

- soit

$$R = F_{54}^{MAX}\left(1 + \frac{L1}{L2}\right)\left(1 - \frac{x_2}{x_1}\right)$$

Il est donc possible, notamment, par un choix judicieux de l'ajustement de la bague 56 non expansée, dans son état nominal, dans l'orifice de blocage 31 du support d'outil 30, par la distance entre le support 30 et la zone de recouvrement 4, par le choix de la capacité du vérin 54, et le cas échéant par le rapport des bras de levier au niveau des biellettes 55, de contrôler dans une plage donnée d'une part la course nécessaire pour arriver au contact métal-métal entre les panneaux à l'interface de l'assemblage, et d'autre part l'effort de pression à appliquer. Ces réglages peuvent par exemple être obtenus par essais successifs.

A titre informatif, une fois cette position d'équilibre atteinte, l'effort reste appliqué sur la zone de recouvrement 4, le retrait du mandrin 51 sous l'effet de la réaction élastique étant empêché par le frottement régnant entre la surface conique du mandrin 51 et celle de la bague 56, à condition que $R$ soit telle que la réaction correspondante ne sorte pas du cône d'adhérence.

Ainsi, le mandrin 51, après relâchement du vérin 54 est, selon l'axe 46, en équilibre sous l'action de deux forces, à savoir :

- $R$, et
- la réaction correspondant à $R$ qui est :

$$C_{51}x_2 \frac{\tan(\varphi 1 - \alpha)}{\tan(\alpha)} \geq R = F_{54}^{MAX}\left(1 + \frac{L1}{L2}\right) - C_{51}x_2$$

On note « $\tau$ » le rapport $\dfrac{\tan(\varphi 1 - \alpha)}{\tan(\alpha)}$, pour une position donnée $x_2$. $R$max est alors définie par :

-

$$\left(F_{54}^{MAX}\left(1 + \frac{L1}{L2}\right)\right)\tau = R\max(1 + \tau)$$

- soit,

$$R\max = F_{54}^{MAX} \frac{\left(1 + \dfrac{L1}{L2}\right)}{\left(1 + \dfrac{1}{\tau}\right)}$$

Le calcul de « $\tau$ » est effectué en considérant que la pression radiale est proportionnelle à tan ($\alpha$), $\alpha$ étant le demi-angle du cône de la surface de contact 53. La force de frottement s'opposant à « l'éjection » du mandrin 51 sous l'effet de la réaction élastique du fuselage est inversée par rapport à la force de frottement qui s'oppose au coulissement du mandrin 51 dans la bague 56, d'où l'expression en tan ($\varphi 1-\alpha$) au lieu de tan ($\varphi 1+\alpha$) trouvée pour $F_{51}$.

Dans le cas préféré de l'outil 40 tel que décrit ci-dessus, du type « Concentric Collet », $\frac{L1}{L2} \cong 5$ , $\alpha = 2{,}5°$ , $\varphi 1 = 8°$. Par suite on a $\frac{1}{\tau} = 0{,}45$ , d'où potentiellement $R\max \cong 4F_{54}^{MAX}$ .

Soit $\frac{x_2}{x_1} = \frac{1}{3}$ , ce qui suppose une raideur de contact élevée entre la zone de recouvrement 4 du fuselage et l'extrémité 50 du mandrin 51.

Dans la pratique, les courses ne sont a priori pas réglées de la sorte, et les raideurs de contact ne sont pas suffisantes pour atteindre de telles conditions. Plus généralement, on constate $R \cong F_{54}^{MAX}$ . Il existe donc dans tous les cas une marge satisfaisante de sécurité par rapport à la stabilité du système.

Cette valeur effectivement constatée de l'effort s'explique dans la mesure où, en partant du contact initial du mandrin 51 avec le fuselage, dans un premier temps, le déplacement selon l'axe 46 de celui-ci a pour effet essentiel de faire fluer le mastic d'interposition. La force **R** est due au fluage du mastic et à la déformation élastique locale du panneau extérieur. Ce processus se poursuit sur une distance de l'ordre du millimètre, jusqu'à ce que le contact métal-métal s'établisse. A ce moment, l'effort **R** croît plus rapidement, car la déformation concerne cette fois une double épaisseur, à savoir les deux panneaux 6, 8, qui est soutenue à faible distance par l'intermédiaire des dispositifs de mise en pression 12 du côté intérieur du fuselage, toujours en place. Le rapport $\frac{x_2}{x_1}$ est donc de l'ordre de 0,8 à 0,85. En conséquence, il est clair que le système est très tolérant vis-à-vis des variations de distance entre les deux panneaux 6, 8 à percer.

Par suite, l'effort de pression couramment appliqué à la pression des tôles par l'outil de perçage est facilement compris entre 600 N et 1200 N, selon l'épaisseur des panneaux en présence.

Il pourrait bien entendu être employé d'autres types d'outils de perçage pour la mise en oeuvre du procédé selon l'invention, comme par exemple des variantes utilisant soit un vérin agissant directement sur la bague 56, soit des systèmes de cames en lieu et place des biellettes 55, le principe d'opération et de réglage des paramètres liés au support d'outil 30 étant en tous points équivalent.

En référence à nouveau à la figure 8, on prévoit préférentiellement que l'épaisseur de la partie de blocage 33 du support d'outil 30 est légèrement inférieure à la longueur de la bague 56, selon l'axe 46. Il est par ailleurs fait en sorte que la distance $x_0$ entre la face inférieure de la partie de blocage 33 du support d'outil 30 au niveau de l'alésage et le fuselage 4 soit telle que les extrémités de la bague 56 dépassent de part et d'autre de l'orifice de blocage 31, lors de l'introduction de cette bague dans ce dernier, introduction stoppée par le contact du mandrin 51 avec le fuselage 4. Ainsi, la distance $x_0$ est de préférence fixée de telle sorte que :

- l'effort de pression adapté puisse s'appliquer au voisinage du trou à percer (distance $x_2$ par rapport à $x_1$ « à vide ») ;
- les deux extrémités de la bague 56 se trouvent à l'extérieur de l'orifice de blocage 31 (distance $x_0$).

Ces deux conditions sont fixées par la hauteur entre le support d'outil et la zone de recouvrement, et par la tolérance de forme de réalisation du support d'outil 30 en comparaison de la tolérance de forme du fuselage à l'emplacement de la zone de recouvrement. L'homme du métier pourra déterminer cette distance et la tolérance sur cette distance par un calcul classique de chaînes de côtes. La tolérance de réalisation sera d'autant plus large que le rapport $\frac{x_2}{x_1}$ a été choisi judicieusement. Dans les conditions évoquées précédemment, avec un rapport $\frac{x_2}{x_1}$ de l'ordre de 0,85, c'est-à-dire de telle sorte que la condition $R \cong F_{54}^{MAX}$ soit vérifiée, la tolérance sur la distance $x_0$ est de +/- 0,2 mm.

Le problème technique qui consiste donc à assurer des conditions de pression adaptées à l'interface en cours de perçage est par conséquent résolu par un choix raisonné des caractéristiques des différents éléments du système de perçage (matière, dimensionnement, etc.) en rapport des caractéristiques de fonctionnement de l'outil de perçage dit « Concentric Collet » et des besoins de pression à l'interface, sur la zone de recouvrement. Sachant que la pression est de préférence comprise entre 400 N et 1200 N, et idéalement aux environ de 600 N, ces conditions peuvent être obtenues par :

- le réglage des distances $x_1$ et $x_2$ par l'intermédiaire de la distance $x_0$ et de l'ajustement de l'orifice de blocage 31 ;
- le choix du « point de fonctionnement » (distance $x_2$) de l'outil de perçage, par rapport au fuselage 4 ;
- la force développée par le vérin 54 ; et
- le choix de la matière de constitution du support d'outil 30 et de préférence l'absence de chemisage acier des orifices de blocage.

Bien entendu, la mise en pression de la zone de recouvrement 4 est réalisée légèrement antérieurement au perçage même de l'orifice désiré dans cette zone, ce perçage étant effectué à l'aide d'un foret (non représenté) traversant le mandrin 51 de façon coaxiale continuant quant à lui à exercer la pression désirée pour globalement éviter la formation de bavures sur les panneaux 6, 8.

Plus précisément, le perçage-fraisurage est effectué à l'aide d'un foret fraisureur, en une seule opération. Le mandrin 51, dont l'extrémité 50 est en contact avec le fuselage 4, définit une butée axiale qui permet d'assurer la précision de profondeur de la fraisure. La profondeur de fraisure est fixée de manière à assurer des conditions adéquates d'affleurement de la tête de rivet. Le réglage approprié de la profondeur de fraisure est par exemple déterminé par des essais en laboratoire qui permettent de définir pour chaque diamètre de rivet la profondeur de fraisure nécessaire afin que les conditions d'affleurement de sa tête soient vérifiées après son écrasement.

L'arrêt de la pénétration, c'est-à-dire l'arrêt de l'avance de l'outil, est assuré par une butée connectée au mandrin 51, lui-même en contact avec le fuselage. Ainsi, la profondeur de fraisure peut être assurée même en cas de fluctuation des distances $x_0$ et $x_2$.

Le perçage/alésage des alliages d'aluminium, constituant la majorité des fuselages actuels, reste délicat sans lubrification. L'arrosage est ici évité du fait du risque d'introduction de fluide de coupe à l'interface pourvue de mastic d'interposition. A cette fin, le perçage est préférentiellement effectué sous micro-pulvérisation d'huile, par le centre de l'outil ou latéralement lorsque le perçage est effectué à grande vitesse de coupe, à savoir de l'ordre de 15 000 trs/min ou supérieure.

Les quantités de lubrification sont de préférence adaptées au diamètre de perçage et de fraisurage, et sont généralement fixées dans une fourchette allant de 3 à 50 ml à l'heure d'un produit lubrifiant dont la viscosité maximale est de 400 $mm^2$/sec. Cet apport de micro-pulvérisation d'huile améliore grandement la qualité du perçage et permet l'utilisation à la fois d'outils de perçage moins puissants, donc plus légers, et de réduire l'effort de pénétration. L'utilisation de la micro-pulvérisation d'huile est rendue possible par la pression suffisante qui règne à l'interface métal-métal au niveau de la jonction, et qui, combinée à la faible quantité, à la viscosité de l'huile et à l'aspiration éventuelle, évite toute introduction d'huile dans le mastic d'interposition.

Avantageusement, la machine peut être équipée d'un dispositif d'aspiration au niveau du pied de pression 52, qui permet d'évacuer vers une centrale de récupération les copeaux et les vapeurs d'huile. Cette aspiration empêche toute souillure des joints de mastic situés à l'extérieur du fuselage. Pour cette même raison de facilité d'évacuation des copeaux, l'utilisation de forets à goujure hélicoïdale est préférable.

Dans certaines circonstances, des copeaux peuvent éventuellement être projetés dans le fuselage intérieur, en sortie d'orifice. Ceux-ci peuvent alors se déposer sur l'interface d'assemblage, particulièrement en partie basse de l'aéronef, et risquent de ce fait de s'introduire dans cette interface. Dans ces conditions, il est avantageux de protéger la ligne d'interface, référencée 2 sur les figures, par une bande adhésive dite « bande cache ».

De préférence, le support d'outil est réalisé en aluminium ou dans l'un de ses alliages, et la bague expansible 56 est réalisée en acier.

En effet, il est noté que le support d'outil 30 doit de préférence pouvoir assurer les fonctions suivantes :

- l'immobilisation de l'outil de perçage 40 en rotation et en translation dans l'orifice de blocage 31, et ceci uniquement par la force de friction de la bague expansible 56 dans l'orifice 31 du support d'outil 30, et
- une durée de vie suffisante du support d'outil 30.

La solution indiquée ci-dessus est préférentiellement retenue étant donné que le frottement entre l'aluminium du support d'outil 30 et l'acier de la bague 56 est près de deux fois plus élevé qu'un frottement acier-acier, ce qui permet de faciliter le blocage en rotation et translation de la bague expansible 56 par rapport au support d'outil 30.

Cependant, cette solution préférée présente une moindre résistance à l'usure. A cet égard, il apparaît que l'usure du support d'outil 30 reste largement acceptable dès lors que celle-ci est uniforme le long de la surface de contact entre la bague 56 et l'orifice de blocage 31. Pour que cette condition soit vérifiée, mais aussi pour éviter une usure plus marquée en entrée et en sortie d'orifice de blocage 31, il est préférentiellement recherché la plus grande surface de contact possible entre la bague 56 et cet orifice de blocage 31. Pour ce faire, le support d'outil 30 est conçu et agencé de sorte que préalablement au mouvement relatif entre la bague expansible 56 et le mandrin d'appui 51, lorsque l'outil de perçage est positionné avec son mandrin d'appui 51 traversant l'orifice de blocage 31 et en contact avec la zone de recouvrement 4, la bague d'expansion 56 fasse saillie de part et d'autre de l'orifice de blocage 31. Cette position préférée doit également préférentiellement être conservée jusqu'au blocage de la bague 56 dans l'orifice de blocage 31.

Ainsi, on fait de préférence en sorte que l'épaisseur de la partie de blocage 33 du support d'outil 30 soit légèrement inférieure à la longueur de la bague expansible 56 selon l'axe central de surface de contact conique. L'écartement initial du support d'outil 30 par rapport à la zone de recouvrement à assembler est également prévu en conséquence.

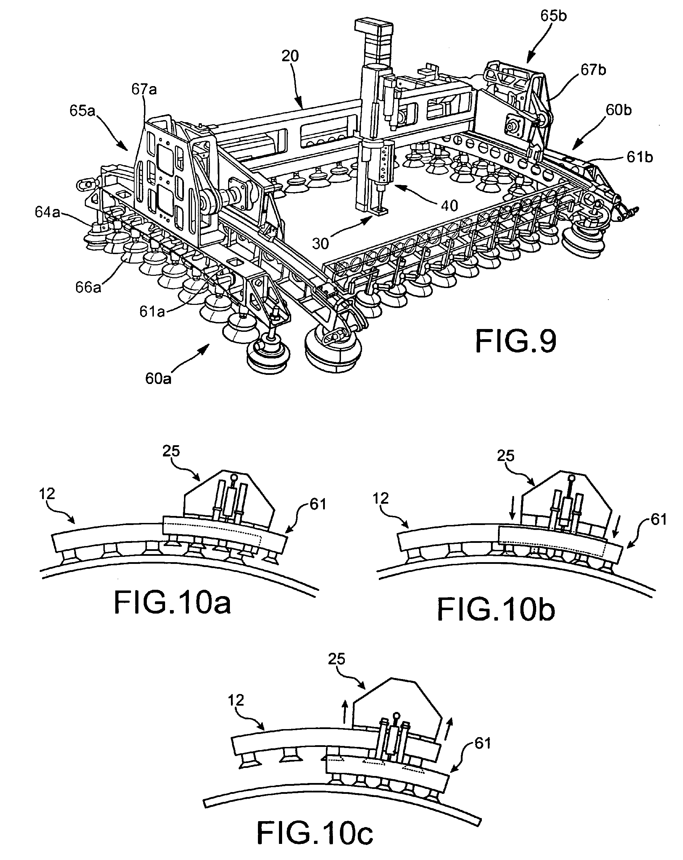

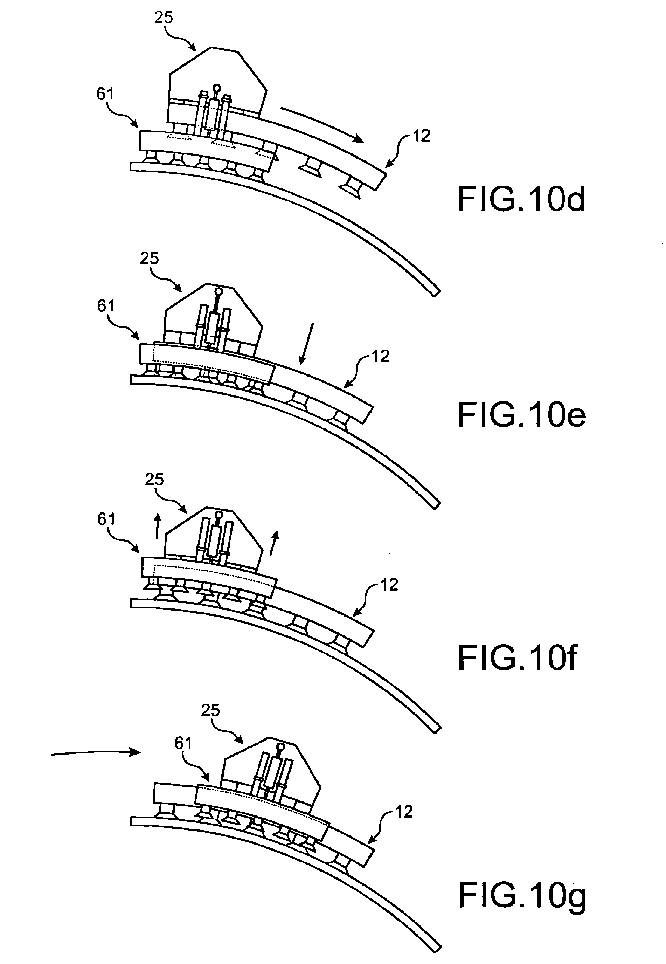

Un second mode de réalisation de l'invention, dans lequel le système de perçage est apte à se déplacer de manière autonome le long de la zone de recouvrement, va maintenant être décrit en détail en référence aux figures 9 et 10.

Comme l'illustre la figure 9, le système de perçage selon ce mode de réalisation de l'invention comprend en outre deux ensembles d'avance 60a, 60b, chacun monté de manière coulissante suivant la direction Z à une extrémité 21a, 21b de ladite poutre 20. Plus précisément et de préférence, les deux ensembles d'avance sont montés au bâti 26a, 26b des organes de coulissement 25a, 25b. Ainsi, les ensembles d'avance 60a, 60b peuvent, d'une part, coulisser suivant la direction Z par rapport à la poutre 20, et d'autre part, se déplacer suivant la direction X par rapport à la structure de support 10 solidairement de la poutre 20. Le système de perçage selon ce mode de réalisation de l'invention est conçu pour pouvoir adhérer ou non à la zone de recouvrement, permettant ainsi son déplacement par reptation sur cette zone de recouvrement.

Les deux ensembles d'avance 60a et 60b comprennent respectivement un rail d'avance 61a, 61b. Chaque rail d'avance 61a, 61b est disposé à proximité et parallèlement aux rails latéraux 12a, 12b, extérieurement au cadre de support 11.

Chaque rail d'avance 61a, 61b supporte une pluralité de pieds 64 situés du même côté du plan formé par le cadre 11 et prévus pour venir en contact avec la surface de travail par des organes d'accrochage 66 tels que des ventouses à actionnement pneumatique. Il peut s'agir également de ventouses à actionnement électromagnétique ou hydraulique. Les organes d'accrochage 66 seront décrits en détail plus loin.

Chaque ensemble d'avance 60a, 60b comprend de préférence un organe d'élévation 65a, 65b capable d'assurer le mouvement relatif des ensembles d'avance par rapport à la poutre 20 suivant la direction Z. Les organes d'élévation 65a, 65b comprennent chacun un bâti 66a, 66b, un organe moteur (non représenté) commandant par exemple un vérin (non représenté) mis en oeuvre pour opérer le mouvement relatif des ensembles d'avance 60a et 60b par rapport à la porteur 20.

Pour adhérer à la zone de recouvrement, le cadre porteur 11 et les rails d'avance 61a, 61b comprennent des organes d'adhérence, par exemple des ventouses pneumatiques. Deux types de ventouses, principales et complémentaires peuvent être avantageusement utilisés.

Les ventouses principales sont disposées à chaque extrémité des rails d'avance, ainsi qu'à chaque angle du cadre de support 11. Elles sont de préférence équipées d'un capteur pour le référentiel de positionnement en altitude de l'ensemble du système de perçage par rapport à la zone de recouvrement. Elles sont fixes et montées légèrement rotulantes pour compenser les éventuels défauts géométriques des panneaux 6, 8 et garantir un bon appui sur lesdits panneaux.

Des ventouses complémentaires sont avantageusement utilisées, qui permettent de sécuriser l'adhérence du système de perçage. Elles sont disposées à intervalle régulier entre les ventouses principales, sur les rails d'avance 61a, 61b et les rails 12a, 12b du cadre de support 11. Elles peuvent accepter facilement des irrégularités des panneaux 6, 8 sans avoir d'influence sur le positionnement en altitude du système de perçage. Comme les ventouses principales, les ventouses complémentaires sont modulables afin d'être démontables rapidement par un opérateur et remontables sans réglage spécifique. De ce fait, on peut prévoir d'enlever des ventouses dans certaines zones spécifiques où il peut y avoir des possibilités d'interférence ou de gêne d'encombrement avec des éléments de l'avion. Chaque ventouse est montée sur un pied fixé à l'élément correspondant. La génération du vide dans chaque ventouse est assurée par un système venturi indépendant, classique pour l'homme du métier. En cas de non contact avec le panneau 6 ou 8, par exemple lorsque la ventouse se trouve au niveau d'un rivet, le système venturi est dans tous les cas piloté. De plus, chaque ventouse est équipée d'un clapet de sécurité. En cas de baisse du niveau de vide au-dessus du clapet, un clapet anti-retour ferme automatiquement le circuit et isole le volume de vide dans la ventouse. Un clapet anti-retour dans le sens inverse permet au contre soufflage de déposer la ventouse. Afin de conserver la modularité au niveau de la ventouse, le pilotage du clapet est ramené dans le support de ventouse et le raccordement pneumatique se fait directement dans l'élément correspondant.

Comme le montre la figure 9, les rails latéraux 12a, 12b ainsi que les rails d'avance 61a, 61b présentent une courbure suivant la direction X sensiblement équivalente à la courbure des panneaux dans cette direction. Ainsi, le système de perçage présente une capacité d'adhérence optimale sur les panneaux. Bien entendu, les rails de raccord 13a, 13b peuvent également présenter une courbure adéquate pour adhérer aux panneaux, dans le cas où ceux-ci présentent une courbure suivant la direction Y.

Par ailleurs, les rails d'avance 61a, 61b ainsi que les rails latéraux 12a, 12b et de raccord 13a, 13b peuvent être démontés sans difficulté pour adapter le système de perçage au(x) rayon(s) de courbure de la surface de travail. Cette modularité des rails du système de perçage permet d'obtenir une bonne flexibilité d'utilisation du système.

Le mode de déplacement du système de perçage mobile autonome selon ce mode de réalisation de l'invention va maintenant être décrit en détail en référence à la figure 10.

Le système de perçage mobile autonome est positionné manuellement ou automatiquement sur la jonction, circonférentielle ou longitudinale, à réaliser. Une fois positionné, le système réalise automatiquement les étapes de perçage, ainsi qu'éventuellement l'ensemble des opérations supplémentaires permettant d'effectuer l'assemblage dans une zone de travail délimitée par le cadre de support. Une fois ces opérations terminées, l'ensemble du système de perçage va se déplacer de façon autonome jusqu'à la prochaine zone de travail et ce, jusqu'à réalisation complète de la jonction. Plusieurs systèmes de perçage peuvent travailler simultanément sur la même jonction afin de réduire le temps nécessaire à la réalisation des opérations d'assemblage.

Comme le montre la figure 10b, lorsque l'ensemble des opérations est réalisé dans la zone de travail, les 2 rails d'avance s'abaissent de façon à mettre en contact leurs ventouses sur les panneaux. Les ventouses solidaires du cadre de support peuvent alors être décollées (figure 10c) tout en gardant l'adhérence du système de perçage sur les panneaux par les ventouses des 2 rails d'avance. L'ensemble structure de support/poutre peut alors être soulevé légèrement suivant Z et translater le long des 2 rails d'avance afin d'atteindre la zone de travail suivante, comme le montre la figure 10d. Une fois positionné au-dessus de la zone de travail, l'ensemble structure de support/poutre peut alors être remis au contact de la structure par le biais de leurs ventouses (figure 10e). Les ventouses des 2 rails d'avance sont alors décollées et les 2 rails d'avance légèrement soulevés suivant la direction Z (figure 10f). Les étapes de perçage et éventuellement d'assemblage sont alors réalisées (figure 10g). Ce cycle est répété jusqu'à ce que le système de perçage soit intervenu sur l'ensemble des zones de travail.

Dans le cas d'un décalage du système de perçage en rotation par rapport à la direction Z, une variation limitée de coulissement de l'organe de coulissement 25a (resp. 25b) par rapport à l'organe de coulissement 25b (resp. 25a) permet un pivotement léger du système de perçage autour de l'axe Z, de manière à se repositionner suivant la direction voulue. Bien entendu, cette étape de correction de position suppose que le cadre de support 11 et la poutre 20 soient réalisés dans un matériau présentant une capacité de déformation en cisaillement suffisante. Par ailleurs, il est avantageux que cette étape soit réalisée lorsque le cadre de support 11 n'adhère pas aux panneaux 6, 8, les rails d'avance 61a, 61b étant en position d'adhérence. Enfin, de préférence, l'étape de perçage est précédée d'une étape de vérification de position dans laquelle un capteur de position (non représenté), par exemple par reconnaissance visuelle, détecte au moins un repère sur les panneaux de manière à contrôler le positionnement du système de perçage. Dans le cas où le positionnement est incorrect, l'étape de correction de position, comme précédemment décrite, est réalisée.

Dans le cas où le système de perçage réalise la pose d'organes de fixation, il est avantageux qu'il coopère avec un opérateur pour réaliser le sertissage des fixations. Les fixations du type « lockbolt » permettent d'être introduites dans le trou percé par le même côté des panneaux que celui où se trouve le système de perçage. Le système de perçage coopère alors avec un opérateur situé de l'autre côté des panneaux. Dans une première étape, le système de perçage effectue la pose d'une fixation « lockbolt » dans le trou percé et assure son maintien pendant que l'opérateur place une bague de sertissage sur la tige de sertissage de la fixation. La bague de sertissage est placée en butée contre la surface intérieure du panneau intérieur. Dans une deuxième étape, l'opérateur utilise un effecteur de rivetage qui agit sur la bague et la tige de sertissage. Tant que l'effecteur de rivetage n'exerce pas un effort de traction déterminé, le système de perçage assure le maintien de la fixation. Pour cela, des moyens de communication sont prévus entre le système de perçage et l'effecteur de rivetage pour communiquer au système de perçage la valeur de l'effort de traction mesuré en temps réel. Enfin, lorsque l'effort de traction atteint la valeur déterminée traduisant ainsi que la fixation est sertie, le système de perçage reçoit l'autorisation de passer à l'étape de perçage suivante. Cette coopération entre le système de perçage mobile autonome et un opérateur lors des opérations de sertissage des fixations posées permet de maintenir le fluage du mastic d'étanchéité à l'interface entre les panneaux et de garantir le contact métal-métal des panneaux au niveau des fixations.

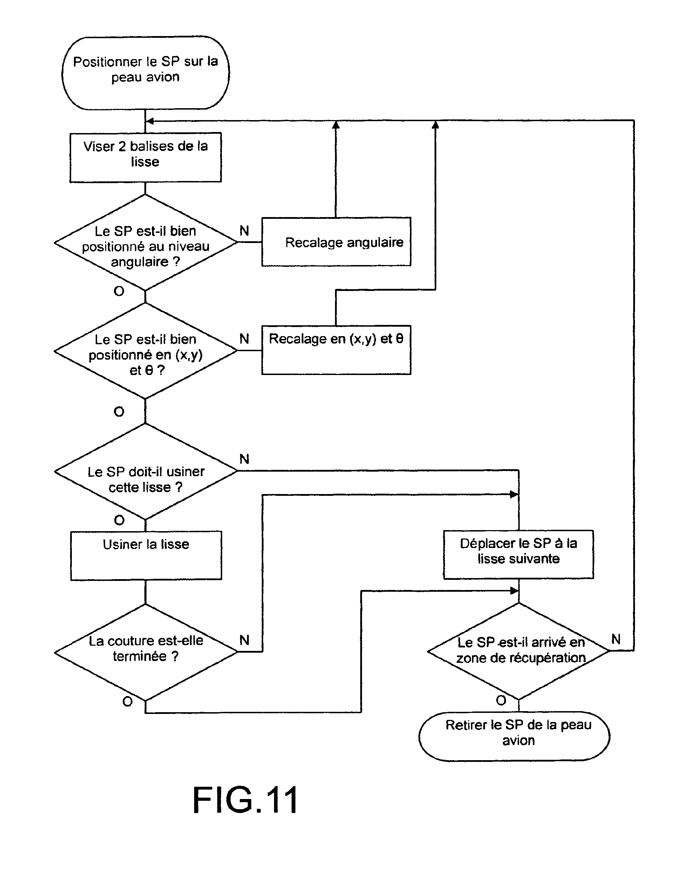

Les différentes étapes d'un exemple nullement limitatif de procédure de fonctionnement du système de perçage sont maintenant décrites en référence à la figure 11.

L'étape 1 consiste à positionner le système de perçage sur la peau de l'avion.

Dans l'étape 2, le système de perçage vise, par exemple par un dispositif de visée optique, deux balises qui indiquent par exemple la position et l'orientation d'une lisse disposée sur le côté intérieur de la peau. Les balises peuvent être des têtes de rivets d'épinglage.

Le système de perçage détermine sa position angulaire par rapport aux balises (étape 3). Si elle n'est pas correcte, il procède à un recalage angulaire (étape 3A) et reprend l'étape 2. Si la position angulaire est correcte, il détermine ensuite sa position par rapport aux coordonnées curvilignes (X,Y) des balises suivant la surface de la peau (étape 4). Si elle n'est pas correcte, il procède à un recalage angulaire et en (X,Y) (étape 4A) et reprend l'étape 2.

Le système de perçage détermine s'il doit usiner la lisse localisée (étape 5). Si oui, il l'usine selon une procédure qui est détaillée plus loin (étape 6). Si non, il se déplace jusqu'à l'une des lisses suivantes (étape 8).

Si la couture est terminée (étape 7), le système de perçage détermine s'il est en zone de récupération (étape 9). S'il n'y est pas, il reprend la procédure à partir de l'étape 2 ; et s'il y est, il peut être retiré de la peau de l'avion (étape 10). Si la couture n'est pas terminée, il se déplace jusqu'à l'une des lisses suivantes (étape 8).

## Revendications

1. Système de perçage comprenant :

   - une structure de support (10), destinée à être montée sur une surface à percer,
   - une poutre (20) portée par la structure de support (10),
   - un support d'outil (30) porté par ladite poutre (20), et
   - un outil de perçage (40) monté sur ledit support d'outil (30)

   par liaison glissière de direction parallèle à l'axe de perçage défini par ledit outil (40)
   **caractérisé en ce que**
   ledit support d'outil (30) présente un orifice de blocage (31),
   ledit outil de perçage (40) comportant un mandrin d'appui (51) destiné à venir en contact contre ladite surface à percer ainsi qu'une bague expansible (56) épousant ledit mandrin (51) selon une surface de contact conique (53) et adaptée pour qu'un mouvement relatif selon un axe central de surface de contact conique (53) entre ledit mandrin (51) et ladite bague (56) procure une expansion de cette bague (56) capable d'assurer son blocage dans ledit orifice de blocage (31),
   ledit système de perçage étant conçu pour que ledit mouvement relatif entre la bague (56) bloquée dans ledit orifice de blocage (31) et le mandrin d'appui (51) procure, par déplacement dudit outil de perçage (40) par rapport audit support d'outil (30) par l'intermédiaire de ladite liaison glissière, un déplacement du mandrin (51) en direction de ladite surface à percer, à travers l'orifice de blocage (31).

2. Système de perçage selon la revendication 1, **caractérisé en ce que** le support d'outil (30) comprend une première partie (32), sensiblement parallèle à l'axe de perçage, montée sur la poutre (20) et supportant l'outil de perçage (40), et une seconde partie (33) sensiblement orthogonale à l'axe de perçage et comportant ledit orifice de blocage (31).

3. Système de perçage selon la revendication 1 ou 2, **caractérisé en ce que** l'outil de perçage (40) comporte un corps (42) d'outil de perçage (40) solidaire dudit mandrin (51), et comporte en outre un vérin (22) disposant d'un cylindre solidaire dudit corps d'outil (42) et dont le piston est raccordé à la bague expansible (56).

4. Système de perçage selon l'une quelconque des revendications 1 à 3, **caractérisé en ce que** ledit support d'outil (30) est monté de manière coulissante sur ladite poutre (20) suivant l'axe de perçage.

5. Système de perçage selon l'une quelconque des revendications 1 à 4, **caractérisé en ce que** ladite poutre (20) est montée de manière coulissante sur la structure de support (10) suivant un premier axe sensiblement orthogonal à l'axe de perçage.

6. Système de perçage selon la revendication 5, **caractérisé en ce qu'**il comporte :

   - au moins deux ensembles d'avance (60a, 60b), chacun monté de manière coulissante à ladite poutre (20) suivant une direction d'élévation (Z) sensiblement parallèle à l'axe de perçage,

   ladite structure de support (10) et lesdits ensembles d'avance (60a, 60b) portant chacun des organes d'accrochage (16, 17 ; 66) adaptés pour adhérer sur ladite surface à percer, et
   un organe de commande commandant le déplacement relatif des ensembles d'avance (60a, 60b) par rapport à la poutre (20) et le déplacement relatif de la poutre (20) par rapport à la structure de support (10).

7. Système de perçage selon la revendication 6, **caractérisé en ce que**
   la poutre (20) comprend deux organes de coulissement (25a, 25b) chacun fixé à une extrémité (21a, 21b) de ladite poutre (20) et lié par liaison glissière à la structure de support (10),
   chaque organe de coulissement (25a, 25b) étant équipé d'un organe moteur assurant le coulissement dudit organe de coulissement (25a, 25b) sur la structure de support (10),
le système de perçage comprenant au moins un capteur pour détecter une orientation de la structure de support (10) par rapport à une ligne désirée de déplacement, et une unité de commande pour commander lesdits premier et deuxième organes moteurs de ladite poutre (20) de manière à ramener la structure de support dans une position déterminée en relation à ladite ligne désirée de déplacement.

8. Procédé de perçage réalisé à l'aide du système de perçage selon l'une des revendications précédentes, **caractérisé en ce qu'**on applique, pour chaque étape de perçage d'un trou, un mouvement relatif entre la bague expansible (56) et le mandrin d'appui (51).

9. Procédé de perçage selon la revendication 8, **caractérisé en ce que** l'application dudit mouvement relatif entre la bague expansible (56) et le mandrin d'appui (51) est réalisée de manière à engendrer un déplacement du mandrin (51) en appui contre ladite surface à percer et à travers ledit orifice de blocage (31), sur une distance (x2) respectant la condition (x2) > 0,90.(x), où (x) correspond à une distance totale du mouvement relatif appliqué entre la bague (56) et le mandrin (51).

10. Procédé de perçage selon la revendication 8 ou 9, **caractérisé en ce que** l'application dudit mouvement relatif entre la bague expansible (56) et le mandrin d'appui (51) est réalisée de manière à engendrer, en fin d'application, une pression de mandrin d'appui (51), sur ladite surface à percer, comprise entre environ 600 et 1200 N.

**Claims**

1. A drilling system comprising:

   - a support structure (10), intended to be mounted on a surface to be drilled,
   - a beam (20) supported by the support structure (10),
   - a tool holder (30) supported by said beam (20), and
   - a drilling tool (40) mounted on said tool holder (30)

   by sliding connection in the direction parallel to the drilling axis defined by said tool (40), **characterized in that** :

   said tool holder (30) includes a locking orifice (31),
   said drilling tool (40) including a bearing mandrel (51) intended to come into contact against the surface to be drilled as well as an expandable ring (56) closely fitting the mandrel (51) along a tapered contact surface (53) and adapted so that a relative movement along a tapered contact surface central axis (53) between the mandrel (51) and the ring (56) procures an expansion of said ring (56) capable of ensuring its locking in the locking orifice (31),
   the drilling system being designed so that the relative movement between the ring (56) locked in the locking orifice (31) and the bearing mandrel (51) procures, by movement of the drilling tool (40) relative to the tool holder (30) via the slide connection, a movement of the mandrel (51) towards the surface to be drilled, through the locking orifice (31).

2. The drilling system according to claim 1, **characterized in that** the tool holder (30) comprises a first portion (32), substantially parallel to the drilling axis, mounted on the beam (20) and supporting the drilling tool (40), and a second portion (33) substantially orthogonal to the drilling axis and including said locking orifice (31).

3. The drilling system according to claim 1 or 2, **characterized in that** the drilling tool (40) includes a drilling tool (40) body (42) integral with said mandrel (51), and also includes a jack (22) having a cylinder integral with said tool body (42) and the piston of which is connected to the expandable ring (56).

4. The drilling system according to any one of claim 1 to 3, **characterized in that** said tool holder (30) is slidingly mounted on said beam (20) along the drilling axis.

5. The drilling system according to any one of claims 1 to 4, **characterized in that** said beam (20) is mounted on the support structure (10) along a first axis substantially perpendicular to the drilling axis.

6. The drilling system according to claim 5, **characterized in that** it includes:

- at least two advancement assemblies (60a, 60b), each mounted slidingly to said beam (20) along an elevation direction (Z) substantially parallel to the drilling axis,

said support structure (10) and said advancement assemblies (60a, 60b) each supporting hooking members (16, 17; 66) adapted to adhere on said surface to be drilled, and
a control member controlling the relative movement of the advancement assemblies (60a, 60b) relative to the beam (20) and the relative movement of the beam (20) relative to the support structure (10).

7. The drilling system according to claim 6, **characterized in that**
the beam (20) comprises two sliding members (25a, 25b) each being fastened to one end (21a, 21b) of said beam (20) and connected by slide connection to the support structure (10),
each sliding member (25a, 25b) being equipped with a motor member ensuring the sliding of said sliding member (25a, 25b) on the support structure (10),
the drilling system comprising at least one sensor for detecting an orientation of the support structure (10) relative to a desired movement line, and a control unit for controlling said first and second motor members of said beam (20) so as to bring the support structure back to a determined position relative to the desired movement line.

8. Drilling method carried out using the drilling system according to one of the preceding claims, **characterized in that**, for each step for drilling a hole, a relative movement is applied between the expandable ring (56) and the bearing mandrel (51).

9. Drilling method according to claim 8, **characterized in that** the application of said relative movement between the expandable ring (56) and the bearing mandrel (51) is preferably done so as to create a movement of the bearing mandrel (51) against said surface to be drilled and through said locking orifice (31), over a distance (x2) respecting the condition (x2) > 0,90. (x), where (x) corresponds to a total distance of the relative movement applied between the ring (56) and the mandrel (51).

10. Drilling method according to claim 8 or 9, **characterized in that** the application of said relative movement between the expandable ring (56) and the bearing mandrel (51) is done so as to create, at the end of application, a bearing mandrel (51) pressure, on said surface to be drilled, between about 600 and 1200 N.

**Patentansprüche**

1. Bohrsystem, umfassend :

- eine Tragstruktur (10), dazu bestimmt, auf eine zu durchbohrende Oberfläche montiert zu werden,
- einen Balken (20), getragen durch die Tragstruktur (10),
- einen Werkzeugträger (30), getragen durch den genannten Balken (20), und
- ein Bohrwerkzeug (40), gleitfähig in einer parallel zu der Bohrachse des genannten Werkzeugs (40) definierten Richtung auf den genannten Werkzeugträger (30) montiert,

**dadurch gekennzeichnet, dass** der genannte Werkzeugträger (30) eine Blockierungsöffnung (31) aufweist, wobei das genannte Bohrwerkzeug (40) eine Abstützhülse (51), bestimmt zur Kontaktaufnahme mit der genannten zu durchbohrenden Fläche, sowie einen expandierbaren Ring (56) umfasst, der die genannte Hülse (51) gemäß einer konischen Kontaktfläche (53) umschließt und so angepasst ist, dass eine Relativbewegung gemäß einer Mittelachse der konischen Kontaktfläche zwischen der genannten Hülse (51) und dem genannten Ring (56) eine Ausdehnung dieses Rings (56) bewirkt, die seine Blockierung in der genannten Blockierungsöffnung (31) gewährleistet,
wobei das Bohrsystem so konzipiert ist, dass die genannte Relativbewegung zwischen dem in der genannten Blockierungsöffnung (31) blockierten Ring (56) und der Abstützhülse (51) durch Verschiebung des genannten Bohrwerkzeugs (40) in Bezug auf den genannten Werkzeugträger (30) mittels der genannten gleitfähigen Verbindung eine Verschiebung der Hülse (51) in Richtung der genannten zu durchbohrenden Oberfläche bewirkt, durch die Blockierungsöffnung (31) hindurch.

2. Bohrsystem nach Anspruch 1, **dadurch gekennzeichnet, dass** der Werkzeugträger (30) einen ersten Teil (32) umfasst, der im Wesentlichen parallel zu der Bohrachse ist, an dem Balken (20) befestigt ist und das Bohrwerkzeug (40) trägt, sowie einen zweiten Teil (33), der im Wesentlichen rechtwinklig zu der Bohrachse ist und die genannte Blockierungsöffnung (31) aufweist.

3. Bohrsystem nach Anspruch 1 oder 2, **dadurch gekennzeichnet, dass** das Bohrwerkzeug (40) ein mit der genannten Hülse (51) verbundenes Hauptteil (42) des Bohrwerkzeugs und außerdem einen mit dem Hauptteil (42) verbundenen Zylinder (22) umfasst, dessen Kolben mit dem expandierbaren Ring (56) verbunden ist.

4. Bohrsystem nach einem der Ansprüche 1 bis 3, **dadurch gekennzeichnet, dass** der genannte Werkzeugträger (30) gleitfähig gemäß der Bohrachse auf den genannten Balken (20) montiert ist.

5. Bohrsystem nach einem der Ansprüche 1 bis 4, **dadurch gekennzeichnet, dass** der genannte Balken (20) gleitfähig gemäß einer ersten, zur Bohrachse im Wesentlichen rechtwinkligen Achse auf die Tragstruktur (10) montiert ist.

6. Bohrsystem nach Anspruch 5, **dadurch gekennzeichnet, dass** es umfasst :

   - wenigstens zwei Vorschubeinheiten (60a, 60b), jede gleitfähig gemäß einer im Wesentlichen zur Bohrachse parallelen Elevationsrichtung (Z) auf den genannten Balken (20) montiert,

   die genannte Tragstruktur (10) und die genannten Vorschubeinheiten (60a, 60b), alle mit Befestigungsorganen (16, 17 ; 66), fähig an der genannten zu durchbohrenden Oberfläche zu haften, und

   ein Steuerorgan zum Steuern der Relativverschiebung der Vorschubeinheiten (60a, 60b) in Bezug auf den Balken (20) und der Relativverschiebung des Balkens (20) in Bezug auf die Tragstruktur (10).

7. Bohrsystem nach Anspruch 6, **dadurch gekennzeichnet, dass**
   der Balken (20) zwei Gleitorgane (25a, 25b) umfasst, jedes an einem Ende (21a, 21 b) des genannten Balkens (20) befestigt und durch eine gleitfähige Verbindung mit der Tragstruktur (10) verbunden,
   jedes Gleitorgan (25a, 25b) mit einem Antriebsorgan verbunden ist, welches das Gleiten des genannten Gleitorgans (25a, 25b) auf der Tragstruktur (10) gewährleistet,
   das Bohrsystem wenigstens einen Sensor zur Detektion einer Ausrichtung der Tragstruktur (10) in Bezug auf eine erwünschte Verschiebungslinie und eine Steuereinheit zur Steuerung des genannten ersten und genannten zweiten Antriebsorgans des Balkens (20) umfasst, um die Tragstruktur in eine bestimmte Position in Bezug auf die genannte erwünschte Verschiebungslinie zu bringen bzw. zurückzubringen.

8. Bohrverfahren, realisiert mit Hilfe des Bohrsystems nach einem der vorhergehenden Ansprüche, **dadurch gekennzeichnet, dass** man für jeden Schritt zum Bohren eines Lochs eine Relativbewegung zwischen dem expandierbaren Ring (56) und der Abstützhülse (51) anwendet.

9. Bohrverfahren nach Anspruch 8, **dadurch gekennzeichnet, dass** die Anwendung der genannten Relativbewegung zwischen dem expandierbaren Ring (56) und der Abstützhülse (51) realisiert wird, indem man die sich abstützende Hülse (51) gegen die genannte zu durchbohrende Oberfläche und durch die Blockierungsöffnung (31) hindurch über eine Distanz (x2) verschiebt, unter Einhaltung der Bedingung (x2) > 0,90 . (x), wobei (x) einer Gesamtdistanz der zwischen dem Ring (56) und der Hülse (51) ausgeführten Relativbewegung entspricht.

10. Bohrverfahren nach Anspruch 8 oder 9, **dadurch gekennzeichnet, dass** die Anwendung der genannten Relativbewegung zwischen dem expandierbaren Ring (56) und der Abstützhülse (51) so realisiert wird, dass am Ende dieser Anwendung die Abstützhülse (51) auf die genannte zu durchbohrende Oberfläche einen zwischen ungefähr 600 N und 1200 N enthaltenen Druck ausübt.

FIG.1

FIG.2

FIG.3

30

32

31

33

FIG.4

40

57

52

55

51

56

48

54

43

47

55

46

51

58

EP 2 328 716 B1

FIG.5

FIG.6

22

**FIG.7**

**FIG.8**

FIG.9

FIG.10a

FIG.10b

FIG.10c

FIG.10d

FIG.10e

FIG.10f

FIG.10g

FIG.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5468099 A
- US 6011482 A

- EP 0761351 A